Europäisches Patentamt

(19) European Patent Office

Office européen des brevets

(11) Publication number: **0 459 672 A1**

(12) # EUROPEAN PATENT APPLICATION

(21) Application number: **91304511.8**

(51) Int. Cl.⁵: **A01G 13/00**

(22) Date of filing: **20.05.91**

(30) Priority: **18.05.90 GB 9011203**

(43) Date of publication of application:
**04.12.91 Bulletin 91/49**

(84) Designated Contracting States:
**AT BE CH DE DK ES FR GB GR IT LI LU NL SE**

(71) Applicant: **CORRUPLAST LIMITED**
**Correx House Madleaze Industrial Estate**
**Bristol Road Gloucester, GL1 5SG (GB)**

(72) Inventor: **Haines, Clive Peter**
**"Woodcroft", Tibberton**
**Gloucester, Gloucestershire, GL19 3AQ (GB)**

(74) Representative: **Johnson, Terence Leslie et al**
**Edward Evans & Co. Chancery House 53-64**
**Chancery Lane**
**London WC2A 1SD (GB)**

(54) **Protective enclosure.**

(57) The invention relates to a blank of material comprising a plurality of panels and a fold line between adjacent panels, characterised by the fold line (12) being formed by heat treatment, and by the adjacent panels (11) being maintained at a desired angular disposition while the heat formed fold line (12) is cooled to ambient temperature or substantially so, the arrangement being such as to maintain a desired angular configuration between the adjacent panels (11).

EP 0 459 672 A1

FIG.1

The invention relates to a protective enclosure made generally from a sheet of thermoplastic material, particularly a protective enclosure such as a tree shelter which in use provides protection for a delicate object such as a tree, sapling, plant or the like.

Often such tree sheets are tubes of polygonal cross-secion as viewed in plan, and sometimes they have a tendency to collapse, say under pressure of a wind. Braces have therefore been provided, but these can be cumbersome and relatively expensive. It is accordingly an object of the invention to seek to mitigate this disadvantage.

According to one aspect of the invention there is provided a blank of material, comprising a plurality of panels and a fold line between adjacent panels, characterised by the fold line being formed by heat treatment and by the adjacent panels being maintained at a desired angular disposition while the head formed fold line is cooled to ambient temperature or substantially so, the arrangement being such as to maintain a desired angular configuration between the adjacent panels.

The blank may be characterised by an end and by the end being folded over and secured to an outer surface of the blank. This provides, where the blank is used to provide a tree shelter, for minimum abrasion of a tree, sapling or the like in the shelter.

Preferably, the end may be secured to the outer surface of the blank by heat welding. This provides a relatively simple construction.

The blank may have nine panels and the fold line between immediately adjacent panels may be formed by heat treatment, and lateral panels of the blank may be overlapped and secured together to form a substantially octagonal protective enclosure. This provides an optimum shape of blank, and enclosure assembled therefrom.

Preferably, the blank is made from a fluted material, that is a material of suitable plastic, with two spaced major surfaces connected together by transverse walls to provide flutes which extend longitudinally of the blank.

The blank may be folded round a mandrel for providing the desired angular configuration. This is a relatively simple constructional feature.

The outside dimension of the blank may be such as to be received within, or receive within, a blank made by a similar method. Suitably, the blank may be nested with another blank. This provides for storage and transport with little waste of space.

According to a second aspect of the invention there is provided a protective enclosure such as a tree shelter, characterised by being assembled from a blank as hereinbefore defined.

A blank for erection to provide a protective enclosure such as a tree shelter, and a tree shelter erected therefrom, are hereinafter, described by way of example, with reference to the accompanying drawings.

Fig. 1 is a perspective view of part of a tree shelter erected from a blank according to the invention;

Fig. 2 shows to a smaller scale the tree shelter of Fig. 1 erected and in use with a support member such as a wooden stake;

Fig. 3 shows tree shelters according to the invention, nested one within the other; and

Fig. 4 shows further tree shelters according to the invention, nested one within the other.

Referring to the drawings, in which like parts are referred to by like reference numerals, there is shown a blank comprising a plurality of panels 11 and a fold line 12 between adjacent panels, each fold line 12 being formed by heat treatment, the adjacent panels 11 being maintained at a desired angular disposition while the heat formed fold line 12 is cooled to ambient temperature or substantially so, the arrangement being such as to maintain a desired angular configuration between the adjacent panels 11.

The blank 10 is made from a sheet of extruded fluted thermoplastic material such as that sold under the Registered Trade Mark "CORREX", the flutes running vertically (as considered in the Figures), though they could be horizontal.

The blank 10 is partitioned into a plurality, in the embodiment nine, of panels 11, immediately adjacent ones being separated by a respective fold or crease line 12 formed by heat treatment, the blank 10 being bent whilst "hot" and then cooled so that the blank 10 retains the shape or configuration shown whilst being held or maintained on a mandrel of octogonal configuraiton to maintain the desired spatial relationship between adjacent panels 11. When cool, the blank retains the required shape shown. The panels 11$\underline{a}$ and 11$\underline{b}$ are overlapped and secured together as by heat welding or stapling to provide an assembled protective enclosure or tree shelter.

One end of the blank 10 is folded over before heat formation of the fold lines 12 to provide a smooth transition from the interior to the exterior of a tree shelter 100 erected from the blank 10.

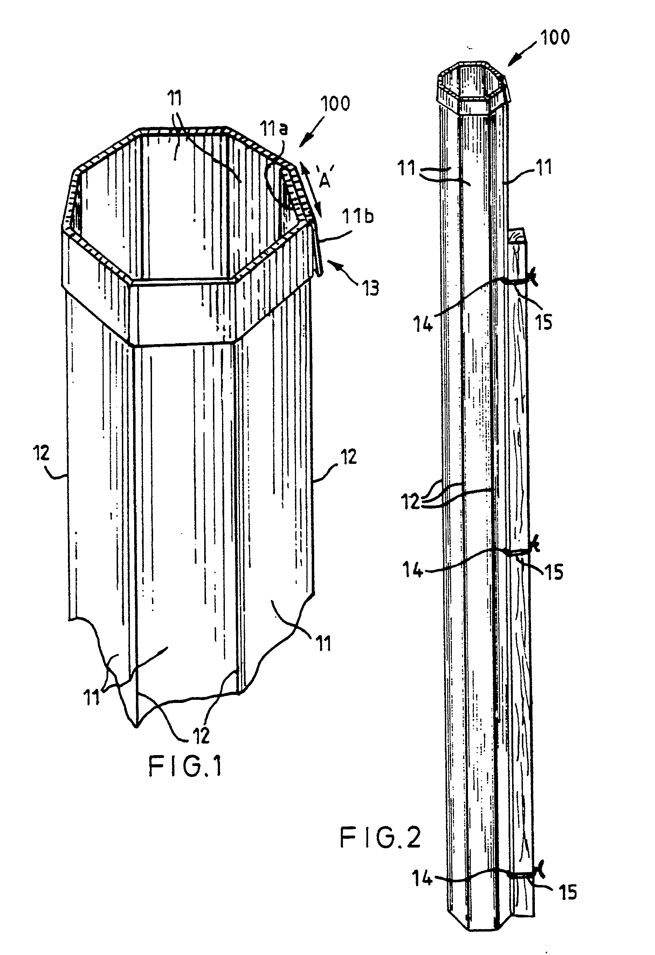

Panels of the blank have means in the form of through holes 14 through which flexible tie means 15 in the form of twine, string wire or the like is threated, as shown in Fig. 2.

When a tree or plant (not shown) is received in the tree shelter 100, the tie means 15 does not strangle the tree or plant, and can be tied round support means such as wooden stake 16. Moreover, where the panels 11$\underline{a}$ and 11$\underline{b}$ are initially not secured togeth but overlap, they are held in position by the stake 16 so no additional securing means such as heat welding or staples is required.

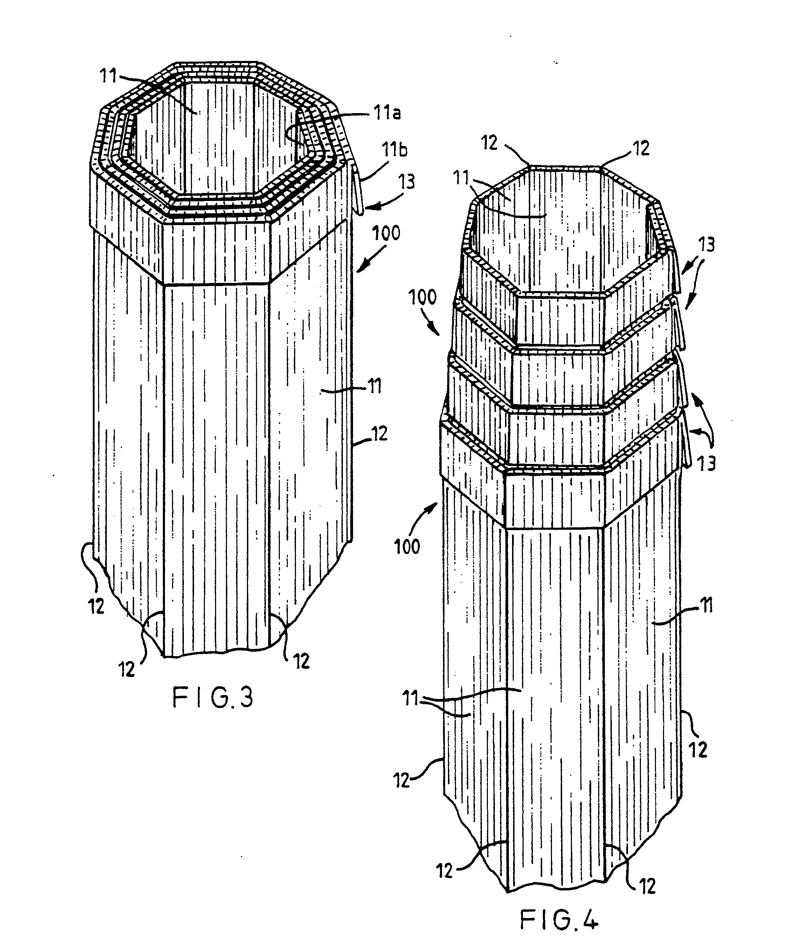

The panels 11 are more than 30 mm wide as shown at "A" so that they are wider than the stake 16 so that there is no rotation round the stake in use. The heat formed hinge lines 12 provide a strong, uncrushable shelter 100 which will not collapse whilst the blank 10 can be readily nested with similar ones to provide for ease of transport and/or storage, as shown in Figs. 3 and 4. In Fig. 3 the outer dimensions of the shelter are such that the shelter can be received entirely one within the other with the top (as viewed) lying substantially in the same plane. In Fig. 4, the outer dimension of the respective tree shelters are such that the tree shelters provide an upwardly tapered pile or stack as shown.

It will be understood that any desired shape of tree shelter for example square or triangular in plan may be provided by using a blank with a requisite number of panels.

It will also be understood that a blank and protective enclosure formed using the invention does not require additional supports - the blank and enclosure maintain their desired structural integrity and shape on cooling of the fold lines, without the need for such supports.

## Claims

1. A blank of material, comprising a plurality of panels and a fold line between adjacent panels, characterised by the fold line (12) being formed by heat treatment, and by the adjacent panels (11) being maintained at a desired angular disposition while the heat formed fold line (12) is cooled to ambient temperature or substantially so, the arrangement being such as to maintain a desired angular configuration between the adjacent panels (11).

2. A blank according to Claim 1, characterised by an end (13) and by the end being folded over and secured to an outer surface of the blank (10).

3. A blank according to Claim 2, characterised by the end (13) being secured to the outer surface of the blank by heat welding.

4. A blank according to any preceding Claim, characterised by having nine panels (11) and by the fold line (12) between immediately adjacent panels being formed by heat treatment, and by lateral panels (11a, 11b) of the blank being overlapped and secured together to form a substantially octogonal protective enclosure.

5. A blank according to any preceding Claim, characterised by being made from a fluted material.

6. A blank according to Claim 5, characterised by the fluted material being a plastic material.

7. A blank according to any preceding Claim, characterised by the blank being folded round a mandrel for providing the desired angular configuration.

8. A blank according to any preceding Claim, characterised by the outside dimension being such as to be received within, or receive within, a similar blank.

9. A blank according to Claim 8, characterised by the blank being nested with another blank.

10. A protective enclosure such as a tree shelter, characterised by being assembled from a blank (10) according to any preceding Claim.

FIG.1

FIG.2

FIG.3

FIG.4

**European Patent Office**

# EUROPEAN SEARCH REPORT

Application Number

EP    91 30 4511

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-325 490 (CORRUPLAST LTD)<br><br>* column 1, line 30 – column 2, line 24; claim 10; figures 1-3 * | 1-2,5-7,<br>10 | A01G13/00 |
| Y | US-A-4 601 689 (M.A. FINKLE ET AL.)<br><br>* Abstract *<br>* claims 1-12; figures 1-3B * | 1-2,5-7,<br>10 | |
| A | WO-A-8 701 904 (TUBEX LTD)<br>* Abstract *<br>* claims 10-14; figure 5 * | 8-9,10 | |
| A | DE-A-1 807 347 (FRANKISCHE ISOLIERRORH UND METALLWARENWERKE GEBR.)<br>* page 3, paragraph 4 – page 3, paragraph 5; claims 1-2; figures 1-2 * | 5-6,10 | |
| A | GB-A-2 224 421 (W. CROWDER & SONS LTD)<br>* page 2, line 1 – page 3, line 10; figures 1-2 * | 1,10 | |
| | | | **TECHNICAL FIELDS SEARCHED (Int. Cl.5)**<br><br>A01G |

The present search report has been drawn up for all claims

| Place of search | Date of completion of the search | Examiner |
|---|---|---|
| THE HAGUE | 14 AUGUST 1991 | FONTS CAVESTANY A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)